(19) Europäisches Patentamt
European Patent Office
Office européen des brevets

(11) Publication number: **0 204 876 B1**

(12) **EUROPEAN PATENT SPECIFICATION**

(45) Date of publication of patent specification: **22.01.92**

(51) Int. Cl.5: **G11B 7/24**

(21) Application number: **85308865.6**

(22) Date of filing: **05.12.85**

(54) **Optical data storage medium having a highly reflective organic information layer.**

(30) Priority: **08.04.85 US 720606**

(43) Date of publication of application:
**17.12.86 Bulletin 86/51**

(45) Publication of the grant of the patent:
**22.01.92 Bulletin 92/04**

(84) Designated Contracting States:
**BE DE FR GB IT NL**

(56) References cited:
**EP-A- 186 404**
**EP-A- 0 023 102**
**US-A- 4 364 986**
**US-A- 4 492 750**
**EP-A- 191 215**
**EP-A- 0 134 518**
**US-A- 4 412 231**

(73) Proprietor: **CELANESE CORPORATION**
**1211 Avenue of the Americas**
**New York New York 10036(US)**

(72) Inventor: **Kuder, James E.**
**91 Willoughby Road**
**Fanwood New Jersey(US)**
Inventor: **Jones, R. Sidney, Jr.**
**123 Mountainside Drive**
**Randolph New Jersey(US)**
Inventor: **Nikles, David E.**
**23 Edgewood Avenue**
**Colonia New Jersey(US)**

(74) Representative: **De Minvielle-Devaux, Ian Benedict Peter et al**
**CARPMAELS & RANSFORD 43, Bloomsbury Square**
**London WC1A 2RA(GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Field of the Invention:

This invention relates to a novel optical information recording medium and the recording of information thereon. More particularly, the present invention relates to an information recording medium, preferably in the form of a disk or in a tape format, suitable for use with optical recording and playback apparatus, with the information layer of the recording medium comprising a highly reflective organic chromophore composition. In particular, the organic chromophore composition exhibits high reflectivity of at least 20 percent and good amorphous film forming characteristics.

Description of the Prior Art:

Optical recording methods in which light from a laser is focused upon the surface of a recording medium with sufficient intensity to cause a detectable change in the physical characteristics of the surface material have been proposed. Among these methods is the establishment of an information pattern of pits. In such methods, the information representative pattern of pits may be formed in the surface of the recording medium by suitably controlling the intensity of the focused light in accordance with the information to be recorded while relative motion is established between the recording medium and the focused light spot.

In one form of conventional optical information recording media, from which reading or reproduction of the recorded information is done by the so-called reflection method, the recording layer of the medium comprises a light-reflecting material, for example, aluminum or gold, coated with a light-absorbing material. In the reading of the recorded information, a laser beam which is less intense or which emits at another wavelength than the laser beam employed for the recording is applied to the surface of the recording layer, and the difference in reflectance between the exposed light-reflecting material in the recorded areas and the non-reflective light-absorbing material in non-recorded areas is detected. From this detection, the recorded information is reproduced.

However, the use in those recording media of the aforementioned light-reflecting layer, formed separately from the coating of the light-absorbing material, make the production process rather complex and the production cost high. Indeed, the light reflecting layer is often formed by using vapor deposition techniques. Such techniques are generally expensive even when they are applied to mass production.

Thus, what is lacking in the art heretofore is an optical information recording medium simple and economical to produce and which is efficient in absorption of laser beams and which, after recording, exhibits high reflectance contrast between the recorded areas and the adjacent non-recorded areas (i.e., provides good reproduction performance).

Dyes and pigments have been employed in information layers, often to enhance the sensitivity of the recording layers at the particular wavelength of the laser being used, which results in a much sharper recording and playback of information.

Layers are known which consist entirely of dye and which can be provided on a substrate by means of a vapor deposition process in a small layer thickness of, for example, 0.5 µm and with an optical density of approximately 0.4. Due to the vapor deposition process, the choice of the dye is restricted. For example, dyes having a low vapor pressure, for example, ionic dyes, cannot be used. The same applies to dyes which are thermally unstable.

There are also known dye-polymer layers in which the dye is dissolved or finely divided in a polymeric binder. The layers can be obtained in various manners.

According to one conventional method, the dye is dissolved in liquid monomers. The solution is provided on the substrate to be coated in a thin layer and the monomers are then polymerized. For example, liquid monomers, for example acrylic acid esters, which can be polymerized with light, for example ultraviolet light, may be used. The resulting layers contain a comparatively small quantity of dye because only a small amount of dye, for example at most 5% by weight, can be dissolved in the liquid monomers. The result of the small concentration of dye is that comparatively thick layers in a thickness which is significantly more than 1 µm are required to achieve an acceptable optical density, of for example, 0.4 and more. If a thin layer is desired to be used, the reflectivity is small due to the small concentration of dye.

Furthermore there are known dye-containing layers of a film-forming polymeric binder in which the dye is dissolved or finely divided in the binder matrix. For example, see U.S. Patent No. 4,364,986. These layers are manufactured by dissolving both the polymeric binder and the dye in a suitable solvent or mixture of

solvents, then coating a substrate with a thin layer of the solution and finally evaporating the solvent in air or in a vacuum. By variation of the solvent, a large variety of dyes may be used. The quality of the layer or film is much less dependent on the concentration of the dye than in the above-described layers obtained by using liquid monomers. However, it has not been possible to manufacture dye-containing layers of a film-forming polymeric binder in which a large quantity of dye is dissolved.

Specific U.S. patents which disclose the use of a light absorbing dye in the recording layer include U.S. Patent Nos. 4,412,231 and 4,446,223. The former patent discloses using a mixture of dyes having different light absorbing wavelengths so that the resulting recording layer has a light absorptivity of 80% or more at all the wavelengths in the range of from 400-900 nm. The latter patent discloses an optical information recording element comprising a support coated with a layer of an amorphous composition, which composition comprises a binder and an oxoindolizine or oxoindolizinium dye.

In a paper entitled "Single Wavelength Optical Recording in Pure, Solvent Coated Infrared Dye Layers" by Gravesteijn, Steenbergen and van der Veen, experiments on the use of certain dyes for optical recording for digital and video applications at GaAlAs laser wavelengths are reported. The paper was presented at the Proceeding of the SPIE, "Optical Storage Media", volume 420, June 6-10, 1983. The specific dyes discussed in the paper are squarylium dyes and pentamethine dyes. It is further suggested that solubility in organic solvents can be greatly increased by the introduction of t-butyl groups into thiopyrylium end groups.

The use of dyes in conjunction with optical recording media comprising a styrene oligomer is disclosed in the article by Kuroiwa et al appearing in the Japanese Journal of Applied Physics, Vol. 22, No. 2, February, 1983, pp. 340-343. Among the dyes and pigments discussed as being useful is a copper phthalocyanine pigment. Phase separation and incompatibility between the dyes and oligomers are noted in the article as being problems in the use of dyes for optical information media.

The use of other metal phthalocyanine dyes in optical recording media is disclosed, for example, in U.S. Patent No. 4,458,004. Note also, U.S. Patent No. 4,492,750, which discloses the use of specific naphthalocyanine compounds in optical recording media. The film-coating properties of such dye materials, however, have been generally found to be poor, the read out Signal/Noise (S/N) ratio poor and tending to fluctuate depending on the particular portion of the layer, and the S/N ratio of the read-out deteriorating significantly after repeated irradiations of the read-out light.

Houguchi et al, U.S. Patent No. 3,637,581, discloses chromogen-bonded polymers, with the chromogen possibly being a metal phthalocyanine. The suitability and use of such products in optical mass data storage applications, however, are not disclosed therein.

Thus, while dyes or pigments have been employed in the information storage layers of optical recording media due to their excellent absorption properties, problems are encountered with regard to the application of the dyes or pigments as a stable layer. The addition of dyes to film-forming polymers due to limited solubility of the dye in the polymer and the tendency of the dye/polymer mixture to phase separate over time, as noted above, are severe problems which need to be overcome. Indeed, the higher the pigment or dye concentration, the more likely such problems are encountered.

Thus, the search for a simple and economical information storage medium is continuously ongoing. The use of dyes has heretofore been unsuccessful. An optical information medium which could be readily manufactured and is of simple design should greatly enhance the commercial viability and exploitation of the medium. Of course, any such medium should also exhibit excellent stability with respect to thermal, actinic and oxidative degradation.

Mention should also be made of EP-A-0,191,215, which discloses that the information layer of an optical recording medium may comprise an organic macrocyclic chromophore containing a central hetero-atom or two central hydrogen atoms or isotopes of hydrogen, eg. a naphthalocyanine having silicon as the hetero-atom, which chromophore is substituted with at least one substituent that confers film-forming properties on the chromophore, for instance a monomer or oligomeric substituent comprised of acid, amide or ester units. Such an information layer offers excellent thermomechanical properties and excellent absorption properties in a single-component material and, by utilising such a single-component material, the problem of phase separation that may be encountered in conventional dye/polymer mixtures may be overcome. There is, however, no disclosure of the importance of achieving a reflectance of at least 20%. EP-A-0,191,215 was published on 20 August 1986 and can, at most, be part of the state of the art only in accordance with Article 54(3) EPC.

## SUMMARY OF THE INVENTION

The present invention provides a medium for storage of optical information comprising an information layer in which information can be recorded and read by optical means, characterised in that the said

information layer comprises an organic chromophore composition which exhibits good amorphous film-forming characteristics and a reflectance of at least 20%; specifically, the organic chromophore composition comprises a silicon naphthalocyanine of the structural formula

$$SiNc[O\text{-}SiMe_2\text{-}O\text{-}(CH_2)_3NH\overset{\overset{O}{\|}}{C}(CH_2)_8\overset{\overset{O}{\|}}{C}NH(CH_2)_3OH]_2 \qquad (I)$$

or of the structural formula

$$SiNc[O\text{-}SiMe_2\text{-}O\text{-}(CH_2)_3NH\overset{\overset{O}{\|}}{C}(C_6H_4)\overset{\overset{O}{\|}}{C}NH(CH_2)_3OH]_2 \qquad (II).$$

Embodiments of the invention include erasable optical data media.

The present invention also provides a readable information medium comprising a relatively thick and thermally stable substrate and having coated thereon a layer comprising an information track comprised of a succession of spaced pits, characterised in that the said layer is comprised of an organic chromophore composition which exhibits good amorphous film-forming characteristics and a reflectance of at least 20%; specifically, the organic chromophore composition comprises a silicon naphthalocyanine of the structural formula (I) or (II) given above.

The chromophore composition is readily castable from organic solvents. As a result, the recording medium can be readily and economically manufactured. As stated above, the medium may be erasable. It is possible for the structure of the medium to comprise only two layers, i.e., the substrate and the information layer, as the information layer serves both as the reflective layer and the recording layer. The present invention obviates the need for a metallic reflective layer in addition to an absorbing or recording layer. Of course, optionally, a subbing layer or protective layer can be employed in addition to the substrate and information layer.

In a most preferred embodiment, the medium for storage of optical information is in the form of a disk.

In another embodiment of the present invention, there is provided a method of recording information in a thin film deposited on a relatively thick substrate by irradiating the film with a laser beam in accordance with said information to form pits in the film, said film being comprised of a highly reflective chromophore composition which exhibits good amorphous film-forming properties and a reflectance of at least 20 percent; specifically, the organic chromophore composition comprises a silicon naphthalocyanine of the structural formula (I) or (II) given above.

In another embodiment there is provided by the present invention a method of erasing a deformation information pattern of an optical information medium, which deformation pattern is formed in a film deposited on a substrate and with said erasing being achieved by heating or imparting energy to said film, characterised in that the said film is comprised of an organic chromophore composition which exhibits good amorphous film-forming characteristics and a reflectance of at least 20%; specifically, the organic chromophore composition comprises a silicon naphthalocyanine of the structural formula (I) and (II) given above.

DETAILED DESCRIPTION OF THE PREFERRED EMBODIMENTS The chromophore composition employed in the subject invention can be either a chromophore/polymer combination or a one-component chromophore compound. It is most preferred to utilize a one-component chromophore compound since such a compound would also overcome the problems generally encountered with dye/polymer mixtures.

The reflectance exhibited by the chromophore composition must be at least 20 percent, is preferably at least 30 percent, and is most preferably at least 35 percent. Reflectance, for the purposes of the present invention, is defined by the expression

$$R = \frac{\text{(intensity of light reflected from medium)}}{\text{(intensity of light incident on medium)}}$$

The reflectance may be readily calculated from the optical constants (n,K) of the medium using the equation:

$$R = \frac{(n-1)^2 + K_0^2}{(n+1)^2 + K_0^2}$$

with R = reflectance; n = refractive index of the chromophore composition; and, with $K_0$ being related to the absorption coefficient by $K_0 = \alpha\lambda/4\pi$.

In part, the present invention is derived from the recognition that a highly absorbing medium is also a highly reflective medium. Thus, the present invention, through this recognition, permits one to simplify any optical data storage structure by eliminating the additional reflective layer heretofore employed by the art. Rather, by employing a highly reflective organic chromophore composition in the information layer per the present invention which exhibits reflectance of at least 20 per cent, that same layer acts sufficiently as an absorbing layer and reflecting layer.

It is also important to the present invention that the organic chromophore composition exhibit good amorphous film-forming characteristics. By good amorphous film-forming characteristics it is intended that the composition be capable of forming a smooth, continuous surface of uniform thickness, which surface is optically homogeneous, i.e., containing no scattering centers and exhibiting no birefringence, and which exhibits specular reflectance. A crystalline film would result in light scattering and thereby be detrimental. It is through the combination of properties, i.e., high reflectance and good amorphous film-forming characteristics, that the present invention permits one to efficiently and economically manufacture an optical data storage medium of simple design, e.g., only two primary layers.

As a result, the optical data storage medium of the present invention offers a medium that has the optical properties and write/read performance of media containing metal layers, such as those comprising Te, i.e., the medium of the present invention has a sufficiently high base-line reflectivity and a large change in reflectivity upon marking so as to eliminate the need for a reflective layer. Moreover, the optical data storage medium of the present invention offers the promise of erasability due to the use of an organic material, excellent thermal and chemical stability, processing ease, and a most simplified construction as the need for a reflective sub-layer is eliminated. The present invention can also be useful for any wavelength upon selection of the appropriate chromophore exhibiting the desired optical properties of absorption and reflectivity in accordance with the parameters of the present invention.

When the chromophore composition is a chromophore/polymere combination, it is important that sufficient chromophore loading is possible so that the reflectivity is at least 20 percent. The polymer can be any suitable polymer with good chemical and physical stability and good film-forming properties. Examples of such polymers are the dimer acid polyamides, polyamides, poly(vinylpyridine), polyurethanes, polyesters, silicones and vinyl polymers such as styrene polymers.

The chromophore/polymer combination can comprise a pure mixture of the two, a dispersion of the chromophore in the polymer, or a chemical bonding of the chromophore to the polymer. In the latter case, for example, the selected chromophore can be chemically bonded to the polymer through a connecting group such as a -CO-, -NH-, -O-, -COO- and -CONH-group.

Generally, it has been found that for a chromophore compound having a high extinction coefficient, i.e. $\epsilon \geqq 10^5$, about 30 weight per cent chromophore is needed in the chromophore/polymer combination in order to achieve the desired reflectance. The precise amount of chromophore in weight per cent will vary, of course, based upon the extinction coefficient of the chromophore. The key parameter is the reflectance, as defined before, of the chromophore/polymer combination being at least 20 per cent.

One-component chromophore compounds can also be used. Such compounds are modified chromophore compounds having substituents imparting good film-forming qualities to the chromophore. In such compounds, it is generally the combination of the chromophore and its organic substituents from which the film-forming properties arise. Such a one-component chromophore material allows one to realize the excellent absorption properties of the chromophore, e.g., high extinction coefficient, while also realizing the benefits of the thermomechanical properties of a film-forming material as a result of the film forming properties arising from the combination of the chromophore with the organic substituent. As well, since a single component material is used, the problem of dye/polymer phase separation is avoided. The result is an information layer exhibiting an excellent combination of absorption and thermomechanical properties while allowing one to easily apply the material as a film. By selecting a chromophore material of high

reflectance in accordance with the present invention, all advantages of the present invention can thereby be realized.

The one-component material of the information layer thereby comprises two portions, i.e., the chromophore portion and the film conferring organic substituents to the chromophore. The chromophore portion, i.e., the primary absorbing/reflectance portion of the one-component material, preferably comprises at least 25%-30% by weight of the material. Functionally, of course, the lower limit of the amount of the chromophore portion is determined by the suitable optical absorption and reflectance properties of the material as provided by the chromophore portion. The upper limit of the amount of chromophore portion suitable is determined by the desired thermomechanical properties exhibited by the material. For purposes of the present invention, the reflectance exhibited must be at least 20 per cent.

The number of substitutions of the chromophore in a one-component material can be any amount practicable, the determining factor being the ultimate performance of the one-component chromophore material as the recording layer in an optical recording medium. Generally, the number of substitutions is chosen so that the absorption maximum for the one-component chromophore material corresponds with the output wavelength of the laser used in the optical recording. The thermomechanical properties of the material should also allow data to be recorded on the recording layer by a focused laser beam operating above a threshold power value for writing data and at a useful data rate. The data can then be read by a focused, but lower power, laser beam that causes no detrimental change in the signal obtained from the recording layer. The excellent absorption characteristics of the recording layer material allow the data to be read by changes in reflectivity. The thermomechanical properties of the one-component material can also be controlled by the number, molecular weight and type of substitutions to allow laser addressed erasure of the data and to allow a film of the material to be cast by any technique known to those skilled in the art of coating. In general, therefore, the substituents of the chromophore can be carefully designed so that the desired spectroscoplc, thermomechanical and film-forming properties are combined into the one-component chromophore material.

The preferred chromophore materials in any particular instance is that absorbing sufficiently at the wavelength of the laser used in the write/read system to be employed. The macrocyclic portion of the chromophore can also be substituted with various substituents selected to influence the absorption spectrum of the chromophore. The substituents may be chosen such that the absorption maximum of the chromophore closely corresponds to the wavelength of light used in the recording, erasing, and in most cases, the reading processes. These substituents can also contribute to the ability of the one-component chromophore material to be film forming.

The naphthalocyanines are preferably used with systems employing a diode laser, i.e., wavelength from 750-900 nm.

The most preferred silicon naphthalocyanines for use with a diode laser are those having the following structural formula (with any isomers thereof being contemplated for the purposes of the present invention):

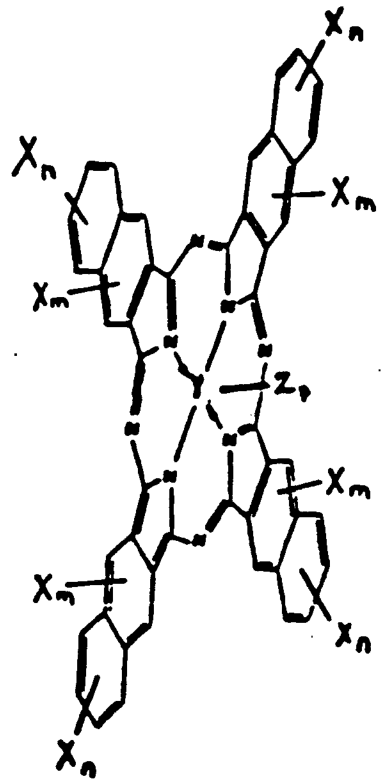

wherein the X substituents are independently selected organic substituents (in particular ether, acid, amide, sulfonamide, ester, acrylate, epoxy, urethane or silicone) and can be the same or different, with n and m indicating the number of independently selected X substituents, and n being the same or different and ranging from 0 to 4, and each m being the same or different and ranging from 0 to 2. $Z_p$ represents the silicon-containing moieties attached to SiNc in the formula (I) or (II) above. Y is a central silicon (Si) atom.

The method of chemically linking X substituents (if present) and the $Z_p$ substituents to the dye ring or central atom can be any conventional method known to the skilled artisan.

The ring substituents X may be the same or different, with X being chosen to affect the absorption spectrum or the film forming and thermomechanical properties of the one-component material. A mixture of X substituents can also be chosen to affect both types of properties, i.e., spectral and thermomechanical.

The coordination geometry of the central hetero atom Y, which herein is silicon, is generally octahedral.

It is most preferred that the film conferring X substituents (if present), are comprised of acid, amide or ester units.

Methods that may be applied to the synthesis of the foregoing one-component chromophore materials are found in U.S. Patent Application No. 698,210 filed 4 February 1985 (from which EP-A-0,191,215 claims priority).

In fabricating the medium, the film formed by the chromophore material of the present invention may be self-supporting, in which case any suitable or conventional casting technique may be used. Generally, however, it is preferred to cast the material as a film on a suitable support to add dimensional stability and support thereto. As well, the film may not always be self-supporting. The substrate may be optically featureless or may contain preformatting information (e.g., tracking groove and/or encoded information in the form of readable marks.) It is important when coating a substrate, of course, that an extremely flat homogeneous information recording surface be obtained to preclude the scattering of light.

Any suitable coating technique may be used to achieve such a flat surface, with a conventional technique such as spin coating, which allows for a high degree of control of film thickness and flatness, being preferred. It is, of course, desired and preferred that the one-component material form a thin film coating.

The substrate which is coated with the chromophore material of the subject invention should generally possess a surface of suitable smoothness. This may be imparted by appropriate molding or other forming techniques when the substrate is made. If the substrate has an inadequately smooth surface, a smoothing or subbing polymer layer may be used to attain the appropriate smoothness. Such a smoothing or subbing layer should not, of course, interfere with application or utilization of the recording layer which is

subsequently applied thereto. The subbing layer can contain preformatting information.

The material of which the substrate is comprised is generally a material exhibiting good structural integrity against warping and good mechanical strength. Examples of suitable materials include aluminum, glass, reinforced glass, ceramics, polymethacrylates, polyacrylates, polycarbonates, phenolic resins, epoxy resins, polyesters, polyimides, polyether sulfones, polyether ketones, polyolefins, polyphenylene sulfide and nylon. Furthermore, the shape and size of the substrate, and hence the recording medium, can vary depending on the application. The shape and format, for example, may be a disk, tape, belt or drum. A disk shape or tape format is most preferred.

The structure of the recording medium itself may also vary in that the recording layer may be coated on one side or both sides of the substrate. Or, two substrates having the recording layer on either side can be combined allowing the sides having the recording layers to face each other at a constant distance, the combined substrates being sealed to prevent dust contamination and scratches.

In addition, guiding grooves may be installed on the substrate, and the recording layer may be installed on the extruded portions and/or intruded portions of the grooves.

A suitable protective layer or cover, such as those known to the art, can also be used if desired to protect the recording layer from dirt, dust, scratches or abrasion.

In addition to the chromophore composition, the recording layer may also contain other polymers or oligomers, various plasticizers, surfactants, antistatic agents, smoothening agents, flame retardants, stabilisers, dispersants, leveling agents, antibleeding agents, antioxidants, water repellents, emulsifiers, etc. as may be desired. The effect the presence of such additives may have on the optical properties of the medium, however, should be taken into account.

In an illustrative recording system embodying the principles of the present invention, a record blank disk form may be subject to rotation at a constant linear or constant angular velocity while a beam of light from a light source, e.g., a laser, is focused on the information surface of the disk. The wavelength of the light being compatible with the absorption characteristics of the chromophore composition of which the recording layer is comprised. The intensity of the light beam is controlled in accordance with the information to be recorded. Illustratively, the control is effected in accordance with carrier waves modulated in frequency by information containing signals, with the light beam intensity varying as a result between a high level sufficient to effect a detectable change in the physical characteristics of the absorptive chromophore material and a low level insufficient to effect such a detectable change, the frequency of the level alternations varying as the signal amplitude changes. Preferred writing speeds are in the range of from $10^6$ to $10^7$ bits per second.

The relative diameter and depth of the holes or pits formed will, of course, depend not only on the optical and thermal properties of the information layer, but also on the characteristics of the writing beam, i.e., focused spot diameter, depth of focus, intensity profile and intensity and duration of the writing pulse. Optimization of these parameters is familiar to those skilled in the art.

As a result of the pit-formation in the recording layer material, an information track comprising a succession of spaced pits is formed in the information surface of the disk, the pits appearing in those surface regions exposed to the high intensity beam. Variations in the length and separation of the pits are representative of the recorded information.

The result of the above-described recording process is the formation of an information record of a form which facilitates recovery of the recorded information by optical playback processes. The information track of such an information record comprises (1) undisturbed surface regions alternating with (2) pit regions formed by the pit-forming process, preferably coated on a substrate. This information track can be in either analog or digital form, for example, audio, video or computer data.

In playback or read operations pursuant to the principles of the present invention, a light beam is focused upon the information track of an information record. The playback beam has a constant intensity at a level insufficient to effect pit formation in the information layer or erasure of the recorded information by levelling. A photodetector, positioned to receive light reflected from the successive regions of the information track as they pass through the path of the focused light, develops a signal representative of the recorded information.

The mode of reading information with media of the present invention involves the relative reflection between the material surface and those areas in which pits have been formed in the recordation of information. Since the reflectivity of the chromophore material surface is of relatively high reflectivity as compared to that of the substrate, the reflectivity in the areas of the pits will be less than in the regions without pits when a beam from the read laser passes thereby. Thus, a written bit will be registered as a decrease in reflected intensity.

An advantage of the present invention is that the resulting information medium can also be suitable for

erasure. The selection of polymer and/or substituents on any particular chromophore will have a profound effect on the erasability of the medium.

Generally, when a pit-forming mode is utilized for recording information, complete and accurate erasure of recorded information can be readily carried out by heating the medium to a sufficiently high temperature such that the chromophore material becomes softened sufficiently to allow levelling of the surface. This can be done globally by heating the entire disk in an oven or some other suitable heating means, or by means of a defocused laser beam whose intensity at the surface of the information layer is intermediate between that of the write beam and read beam. It is generally necessary to heat an area greater than that of a single bit (typically 1µm in diameter).

The present invention is further illustrated by the following examples. The details of the following examples, however, are in no way meant to be limitative, but rather merely illustrative.

In the following examples, the reflectivity of two chromophore compositions were measured, one in accordance with the present invention and one not in accordance with the present invention. In conducting the experiments, the reflectance was measured by first casting thin polymer films on a glass substrate by spin coating using a Headway model EC101D spin coater. The films were thoroughly dried in high vacuum to remove any residual solvent that may have served to plasticize the polymer. The reflectance of the films was then determined by directly measuring the power of the laser beam (a GaAsAl diode laser, 830 nm) reflected off the sample at near normal incidence using a United Detector Technology model S350 optometer. This reflected power was then divided by the measured laser output power to give the percent reflected light.

<u>COMPARATIVE EXAMPLE</u>

4g of a dimer acid polyamide were dissolved in 16g of cyclohexanone with heating and stirring. The dimer acid polyamide comprised 40% Empol 1010 (a dimer acid purchased from Emery Industries, Inc., Cincinnati, OH), 10% sebacic acid, 40% piperazine and 10% ethylene diamine. The solution was then cooled to room temperature and .3g of an infra red absorbing dye, i.e., 1,1',3,3,3',3'-hexamethyl-4,4',5,5'-dibenzo-2,2'-indotricarbocyanine perchlorate, and .15g of a nickel bisdithiolate complex stabilizer (available from Mitsui Toatsu Chemical Co., Inc.) were added to the solution. The dye and stabilizer were dissolved with agitation overnight, and the saturated solution filtered. The filtrate was then spin coated and the reflectance measured as discussed above. The reflectivity was measured as being only 6.1 ± 1%. Such a reflectivity is much too low for purposes of the present invention and, hence, the advantages thereof could not be realized using the above dye/polymer composition.

<u>EXAMPLE 1</u>

A one-component silicon naphthalocyanine "SiNc" material was employed having the following structural formula:

$$SiNc[O-SiMe_2-O-(CH_2)_3NH\overset{O}{\overset{\|}{C}}(CH_2)_8\overset{O}{\overset{\|}{C}}NH(CH_2)_3OH]_2.$$

The material was dissolved in cyclohexanone and then cast as a film as described above by spin coating. The reflectance was measured as being 25 ± 1%.

<u>EXAMPLE 2</u>

A one-component silicon naphthalocyanine material was employed having the following structural formula:

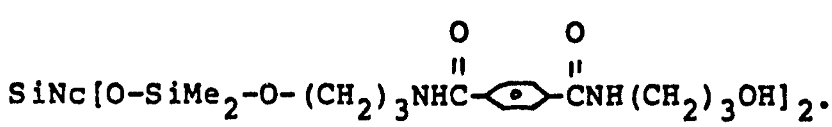

The material was dissolved in cyclohexanone and then cast as a film as described above by spin coating. The reflectance was measured as being 60 ± 1%.

## Claims

1. A medium for storage of optical information comprising an information layer in which information can be recorded and read by optical means, characterised in that the said information layer comprises an organic chromophore composition which exhibits a reflectance of at least 20% and which contains a silicon naphthalocyanine of the structural formula

$$SiNc[O-SiMe_2-O-(CH_2)_3NH\overset{O}{\overset{//}{C}}(CH_2)_8\overset{O}{\overset{//}{C}}NH(CH_2)_3OH]_2 \qquad (I)$$

or of the structural formula

$$SiNc[O-SiMe_2-O-(CH_2)_3NH\overset{O}{\overset{//}{C}}(C_6H_4)\overset{O}{\overset{//}{C}}NH(CH_2)_3OH]_2 \qquad (II).$$

2. The medium of Claim 1, wherein the chromophore composition comprises a one-component chromophore compound.

3. The medium of Claim 1, wherein the chromophore composition comprises a chromophore/polymer combination.

4. The medium of Claim 3, wherein the polymer of the chromophore/polymer combination is a dimer acid polyamide, polyamide, poly(vinylpyridine), polyurethane, polyester, silicone or vinyl polymer.

5. The medium of any of Claims 1 to 4, wherein the chromophore composition exhibits at least 30% reflectance.

6. The medium of any of Claims 1 to 5, wherein the organic chromophore composition of the information layer is solvent castable.

7. The medium of any of Claims 1 to 5, wherein the organic chromophore composition of the information layer is melt castable.

8. The medium of any of Claims 1 to 7, wherein the medium is in the form of a disk.

9. The medium of any of Claims 1 to 7, wherein the medium is in tape format.

10. The medium of any of Claims 1 to 9, wherein the silicon naphthalocyanine is of the structural formula

$$SiNc[O-SiMe_2-O-(CH_2)_3NH\overset{O}{\overset{//}{C}}(CH_2)_8\overset{O}{\overset{//}{C}}NH(CH_2)_3OH]_2 \qquad (I).$$

11. The medium of any of Claims 1 to 9, wherein the silicon naphthalocyanine is of the structural formula

$$SiNc[O{-}SiMe_2{-}O{-}(CH_2)_3NH\overset{\overset{O}{//}}{C}(C_6H_4)\overset{\overset{O}{//}}{C}NH(CH_2)_3OH]_2 \quad (II).$$

**12.** The medium of any of Claims 1 to 11, wherein a substrate is coated directly with the chromophore composition so that the information layer is directly adjacent the substrate.

**13.** The medium of Claim 12, wherein the medium further comprises a protective layer.

**14.** A readable information medium comprising a relatively thick and thermally stable substrate and having coated thereon a layer comprising an information track comprised of a succession of spaced pits, characterised in that the said layer is comprised of an organic chromophore composition which exhibits a reflectance of at least 20% and which contains a silicon naphthalocyanine of the structural formula

$$SiNc[O{-}SiMe_2{-}O{-}(CH_2)_3NH\overset{\overset{O}{//}}{C}(CH_2)_8\overset{\overset{O}{//}}{C}NH(CH_2)_3OH]_2 \quad (I)$$

or of the structural formula

$$SiNc[O{-}SiMe_2{-}O{-}(CH_2)_3NH\overset{\overset{O}{//}}{C}(C_6H_4)\overset{\overset{O}{//}}{C}NH(CH_2)_3OH]_2 \quad (II).$$

**15.** The information medium of Claim 14, wherein the chromophore composition comprises a one-component chromophore compound.

**16.** The information medium of Claim 14, wherein the chromophore composition comprises a chromophore/polymer combination.

**17.** The information medium of Claim 14, 15 or 16, wherein the chromophore composition is coated directly on the substrate so that the information track is directly adjacent the substrate.

**18.** The information medium of Claim 14, 15 or 16, wherein the medium consists essentially of the substrate, the information track layer, and a protective layer or subbing layer.

**19.** An erasable optical data medium comprising an information layer in which information can be recorded and read by optical means, characterised in that the said layer is comprised of an organic chromophore composition which exhibits a reflectance of at least 20% and which contains a silicon naphthalocyanine of the structural formula

$$SiNc[O{-}SiMe_2{-}O{-}(CH_2)_3NH\overset{\overset{O}{//}}{C}(CH_2)_8\overset{\overset{O}{//}}{C}NH(CH_2)_3OH]_2 \quad (I)$$

or of the structural formula

$$SiNc[O{-}SiMe_2{-}O{-}(CH_2)_3NH\overset{\overset{O}{//}}{C}(C_6H_4)\overset{\overset{O}{//}}{C}NH(CH_2)_3OH]_2 \quad (II).$$

**20.** The medium of Claim 19, wherein the chromophore composition is coated directly on a substrate so that the information layer is directly adjacent the substrate.

**21.** The medium of any of claims 1-20 wherein the silicon naphthalocyanine is of the general formula

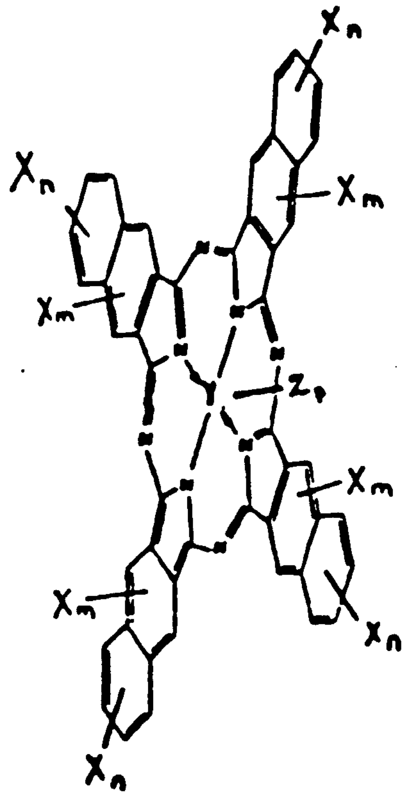

in which
the X substituents are independently selected from ether, acid, amide, sulfonamide, ester, acrylate, epoxy, urethane or silicon substituents,

n and m indicate the number of independently selected X substituents, each n being independently selected from the range from 0 to 4 and each m being independently selected from the range from 0 to 2,

Y represents the Si atom in the moiety "SiNc" in formula (I) or (II), and

$Z_p$ represents the silicon-containing moieties shown attached to the moiety "SiNc" in the formula (I) or (II).

**22.** A method of recording information in a thin film deposited on a relatively thick substrate by irradiating the film with a laser beam in accordance with said information to form pits in the film, characterised in that the said film is comprised of an organic chromophore composition which exhibits a reflectance of at least 20% and which contains a silicon naphthalocyanine of the structural formula

$$SiNc[O\text{-}SiMe_2\text{-}O\text{-}(CH_2)_3NH\overset{O}{\overset{\|}{C}}(CH_2)_8\overset{O}{\overset{\|}{C}}NH(CH_2)_3OH]_2 \quad (I)$$

or of the structural formula

$$SiNc[O\text{-}SiMe_2\text{-}O\text{-}(CH_2)_3NH\overset{O}{\overset{\parallel}{C}}(C_6H_4)\overset{O}{\overset{\parallel}{C}}NH(CH_2)_3OH]_2 \quad (II).$$

**23.** A method of erasing a deformation information pattern of an optical information medium, which deformation pattern is formed in a film deposited on a substrate and with said erasing being achieved by heating or imparting energy to said film, characterised in that the said film is comprised of an organic chromophore composition which exhibits a reflectance of at least 20% and which contains a silicon naphthalocyanine of the structural formula

$$SiNc[O\text{-}SiMe_2\text{-}O\text{-}(CH_2)_3NH\overset{O}{\overset{\parallel}{C}}(CH_2)_8\overset{O}{\overset{\parallel}{C}}NH(CH_2)_3OH]_2 \quad (I)$$

or of the structural formula

$$SiNc[O\text{-}SiMe_2\text{-}O\text{-}(CH_2)_3NH\overset{O}{\overset{\parallel}{C}}(C_6H_4)\overset{O}{\overset{\parallel}{C}}NH(CH_2)_3OH]_2 \quad (II).$$

## Revendications

**1.** Moyen pour l'emmagasinage d'une information optique comprenant une couche d'information dans laquelle l'information peut être enregistrée et lue par un moyen optique, caractérisé en ce que ladite couche d'information comprend une composition organique de chromophore qui présente une réflectance d'au moins 20% et qui contient une silicium naphtalocyanine de la forme de structure

$$SiNc[O\text{-}SiMe_2\text{-}O\text{-}(CH_2)_3NH\overset{O}{\overset{\parallel}{C}}(CH_2)_8\overset{O}{\overset{\parallel}{C}}NH(CH_2)_3OH]_2 \quad (I)$$

ou de la formule de structure

$$SiNc[O\text{-}SiMe_2\text{-}O\text{-}(CH_2)_3NH\overset{O}{\overset{\parallel}{C}}(C_6H_4)\overset{O}{\overset{\parallel}{C}}NH(CH_2)_3OH]_2 \quad (II)$$

**2.** Moyen de la revendication 1, où la composition de chromophore contient une composition de chromophore à un composant.

**3.** Moyen de la revendication 1, où la composition de chromophore contient une combinaison chromophore/polymère.

**4.** Moyen de la revendication 3, où le polymère de la combinaison chromophore/polymère est un polyamide acide dimère, un polyamide, la poly(vinylpyridine), du polyuréthane, un polyester, de la silicone ou un polymère vinylique.

**5.** Moyen selon l'une quelconque des revendications 1 à 4, où la composition de chromophore présente une réflectance d'au moins 30%.

**6.** Moyen selon l'une quelconque des revendications 1 à 5, où la composition de chromophore organique de la couche d'information peut être coulée au solvant.

**7.** Moyen selon l'une quelconque des revendications 1 à 5, où la composition de chromophore organique de la couche d'information peut être coulée en phase fondue.

**8.** Moyen selon l'une quelconque des revendications 1 à 7, où le moyen a la forme d'un disque.

**9.** Moyen selon l'une quelconque des revendications 1 à7, où le moyen a la forme d'une bande.

**10.** Moyen selon l'une quelconque des revendications 1 à 9, où la silicium naphtalocyanine est de la formule de structure

$$SiNc[O\text{-}SiMe_2\text{-}O\text{-}(CH_2)_3NH\overset{O}{\overset{\|}{C}}(CH_2)_8\overset{O}{\overset{\|}{C}}NH(CH_2)_3OH]_2 \qquad (I)$$

**11.** Moyen selon l'une quelconque des revendications 1 à 9, où la silicium naphtalocyanine est de la forme de structure

$$SiNc[O\text{-}SiMe_2\text{-}O\text{-}(CH_2)_3NH\overset{O}{\overset{\|}{C}}(C_6H_4)\overset{O}{\overset{\|}{C}}NH(CH_2)_3OH]_2 \qquad (II)$$

**12.** Moyen selon l'une quelconque des revendications 1 à 11, où un substrat est directement enduit de la composition de chromophore de manière que la couche d'information soit directement adjacente au substrat.

**13.** Moyen de la revendication 12, où le moyen comprend de plus une couche protectrice.

**14.** Moyen d'information lisible comprenant un substrat relativement épais et thermiquement stable et où est enduite une couche comprenant une piste de l'information composée d'une succession de creux espacés, caractérisé en ce que ladite couche est formée d'une composition d'un chromophore organique qui présente une réflectance d'au moins 20% et qui contient une silicium naphtalocyanine de la formule de structure

$$SiNc[O\text{-}SiMe_2\text{-}O\text{-}(CH_2)_3NH\overset{O}{\overset{\|}{C}}(CH_2)_8\overset{O}{\overset{\|}{C}}NH(CH_2)_3OH]_2 \qquad (I)$$

ou de la formule de structure

$$SiNc[O\text{-}SiMe_2\text{-}O\text{-}(CH_2)_3NH\overset{O}{\overset{\|}{C}}(C_6H_4)\overset{O}{\overset{\|}{C}}NH(CH_2)_3OH]_2 \qquad (II)$$

**15.** Moyen d'information de la revendication 14, où la composition de chromophore comprend un composé chromophore à un composant.

**16.** Moyen d'information de la revendication 14, où la composition de chromophore comprend une combinaison chromophore/polymère.

**17.** Moyen d'information de la revendication 14, 15 ou 16 où la composition de chromophore est directement enduite sur le substrat de manière que la piste de l'information soit directement adjacente au substrat.

**18.** Moyen d'information de la revendication 14, 15 ou 16 où le moyen se compose essentiellement du substrat, de la couche de la piste de l'information et d'une couche protectrice ou couche de remplacement.

**19.** Moyen de donnée optique effaçable comprenant une couche d'information dans laquelle l'information peut être enregistrée et lue par un moyen optique, caractérisé en ce que ladite couche se compose d'une composition d'un chromophore organique qui présente une réflectance d'au moins 20% et qui contient une silicium naphtalocyanine de la formule de structure

$$SiNc\left[O\text{-}SiMe_2\text{-}O\text{-}(CH_2)_3NH\overset{O}{\overset{\|}{C}}(CH_2)_8\overset{O}{\overset{\|}{C}}NH(CH_2)_3OH\right]_2 \quad (I)$$

ou de la formule de structure

$$SiNc\left[O\text{-}SiMe_2\text{-}O\text{-}(CH_2)_3NH\overset{O}{\overset{\|}{C}}(C_6H_4)\overset{O}{\overset{\|}{C}}NH(CH_2)_3OH\right]_2 \quad (II)$$

**20.** Moyen de la revendication 19, où la composition de chromophore est enduite directement sur un substrat de manière que la couche d'information soit directement adjacente au substrat.

**21.** Moyen selon l'une quelconque des revendications 1-20 où la silicium naphtalocyanine est de la formule générale

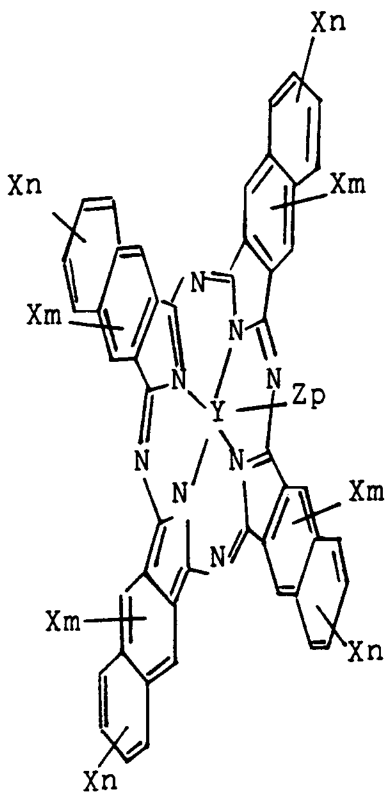

où :
les substituants X sont indépendamment choisis parmi les substituants éther, acide, amide, sulfonamide, ester, acrylate, époxy, uréthane ou silicium,

n et m indiquent le nombre de substituants X indépendamment choisis, chacun étant indépendamment choisi entre 0 et 4 et chaque m étant indépendamment choisi entre 0 et 2,

Y représente l'atome de Si dans le fragment "SiNc" de la formule (I) ou (II), et

Zp représente les fragments contenant du silicium montrés attachés au fragment "SiNc" dans la formule (I) ou (II).

**22.** Méthode d'enregistrement de l'information dans un film mince déposé sur un substrat relativement épais par irradiation du film au moyen d'un faisceau laser selon ladite information pour former des creux dans le film, caractérisée en ce que ledit film se compose d'une composition d'un chromophore organique qui présente une réflectance d'au moins 20% et qui contient une silicium naphtalocyanine de la formule de structure

$$SiNc[O-SiMe_2-O-(CH_2)_3NH\overset{\overset{O}{\|}}{C}(CH_2)_8\overset{\overset{O}{\|}}{C}NH(CH_2)_3OH]_2 \qquad (I)$$

ou de la formule de structure

$$SiNc[O-SiMe_2-O-(CH_2)_3NH\overset{\overset{O}{\|}}{C}(C_6H_4)\overset{\overset{O}{\|}}{C}NH(CH_2)_3OH]_2 \qquad (II)$$

**23.** Méthode d'effacement d'un schéma d'information par déformation d'un support d'information optique lequel schéma de déformation est formé dans un film déposé sur un substrat, ledit effacement étant obtenu en chauffant ou en impartissant de l'énergie audit film, caractérisée en ce que ledit film est formé d'une composition de chromophore organique qui présente une réflectance d'au moins 20% et qui contient une silicium naphtalocyanine de la formule de structure

$$SiNc[O-SiMe_2-O-(CH_2)_3NH\overset{\overset{O}{\|}}{C}(CH_2)_8\overset{\overset{O}{\|}}{C}NH(CH_2)_3OH]_2 \qquad (I)$$

ou de la formule de structure

$$SiNc[O-SiMe_2-O-(CH_2)_3NH\overset{\overset{O}{\|}}{C}(C_6H_4)\overset{\overset{O}{\|}}{C}NH(CH_2)_3OH]_2 \qquad (II).$$

## Patentansprüche

**1.** Medium zur Speicherung optischer Information, umfassend eine Informationsschicht, in der Information aufgezeichnet und durch optische Mittel gelesen werden kann, dadurch gekennzeichnet, daß die Informationsschicht eine organische Chromophor-Zusammensetzung umfaßt, die einen Reflexionsgrad von wenigstens 20 % zeigt und ein Silicium-naphthalocyanin der Strukturformel

$$SiNc[O-SiMe_2-O-(CH_2)_3NH\overset{\overset{O}{\|}}{C}(CH_2)_8\overset{\overset{O}{\|}}{C}NH(CH_2)_3OH]_2 \qquad (I)$$

oder der Strukturformel

$$SiNc[O\text{-}SiMe_2\text{-}O\text{-}(CH_2)_3NH\overset{\overset{O}{\|}}{C}(C_6H_4)\overset{\overset{O}{\|}}{C}NH(CH_2)_3OH]_2 \qquad (II)$$

enthält.

2. Medium nach Anspruch 1, worin die Chromophor-Zusammensetzung eine Einkomponenten-Chromophor-Verbindung umfaßt.

3. Medium nach Anspruch 1, worin die Chromophor-Zusammensetzung eine Chromophor-/Polymer-Kombination umfaßt.

4. Medium nach Anspruch 3, worin das Polymer der Chromophor-/Polymer-Kombination ein Dimersäurepolyamid, Poly__amid, Poly(vinylpyridin), Polyurethan, Polyester, Silicon oder Vinyl-Polymer ist.

5. Medium nach irgendeinem der Ansprüche 1 bis 4, worin die Chromophor-Zusammensetzung einen Reflexionsgrad von wenigstens 30 % zeigt.

6. Medium nach irgendeinem der Ansprüche 1 bis 5, worin die organische Chromophor-Zusammensetzung der Informationsschicht tauchformbar ist.

7. Medium nach irgendeinem der Ansprüche 1 bis 5, worin die organische Chromophor-Zusammensetzung der Informationsschicht schmelzformbar ist.

8. Medium nach irgendeinem der Ansprüche 1 bis 7, worin das Medium in Form einer Scheibe vorliegt.

9. Medium nach irgendeinem der Ansprüche 1 bis 7, worin das Medium das Format eines Bandes hat.

10. Medium nach irgendeinem der Ansprüche 1 bis 9, worin das Silicium-naphthalocyanin die Strukturformel

$$SiNc[O\text{-}SiMe_2\text{-}O\text{-}(CH_2)_3NH\overset{\overset{O}{\|}}{C}(CH_2)_8\overset{\overset{O}{\|}}{C}NH(CH_2)_3OH]_2 \qquad (I)$$

hat.

11. Medium nach irgendeinem der Ansprüche 1 bis 9, worin das Silicium-naphthalocyanin die Strukturformel

$$SiNc[O\text{-}SiMe_2\text{-}O\text{-}(CH_2)_3NH\overset{\overset{O}{\|}}{C}(C_6H_4)\overset{\overset{O}{\|}}{C}NH(CH_2)_3OH]_2 \qquad (II)$$

hat.

12. Medium nach irgendeinem der Ansprüche 1 bis 11, worin ein Substrat direkt mit der Chromophor-Zusammensetzung beschichtet wird, so daß die Informationsschicht dem Substrat unmittelbar benachbart ist.

**13.** Medium nach Anspruch 12, worin das Medium weiterhin eine Schutzschicht umfaßt.

**14.** Lesbares Informationsmedium, umfassend ein relativ dickes und thermisch stabiles Substrat und darauf aufgebracht eine Schicht, die eine Informationsspur umfaßt, die aus einer Folge von in Abständen angeordneten Löchern besteht, dadurch gekennzeichnet, daß die Schicht eine organische Chromophor-Zusammensetzung umfaßt, die einen Reflexionsgrad von wenigstens 20 % zeigt und ein Silicium-naphthalocyanin der Strukturformel

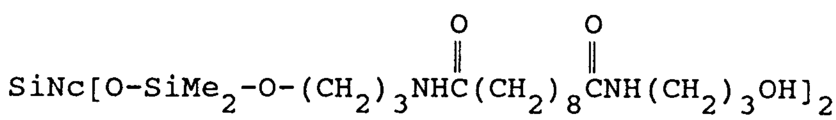 (I)

oder der Strukturformel

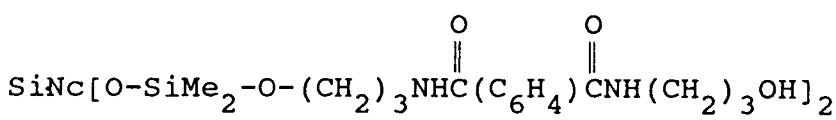 (II)

enthält.

**15.** Informationsmedium nach Anspruch 14, worin die Chromophor-Zusammensetzung eine Einkomponenten-ChromophorVerbindung umfaßt.

**16.** Informationsmedium nach Anspruch 14, worin die Chromophor-Zusammensetzung eine Chromophor-/Polymer-Kombination umfaßt.

**17.** Informationsmedium nach Anspruch 14, 15 oder 16, worin das Substrat direkt mit der Chromophor-Zusammensetzung beschichtet wird, so daß die Informationsspur dem Substrat unmittelbar benachbart ist.

**18.** Informationsmedium nach Anspruch 14, 15 oder 16, worin das Medium im wesentlichen aus dem Substrat, der Schicht der Informationsspur und einer Schutzschicht oder Haftschicht besteht.

**19.** Löschbares optisches Daten-Medium, umfassend eine Informationsschicht, in der Information aufgezeichnet und durch optische Mittel gelesen werden kann, dadurch gekennzeichnet, daß diese Schicht eine organische Chromophor-Zusammensetzung umfaßt, die einen Reflexionsgrad von wenigstens 20 % zeigt und ein Silicium-naphthalocyanin der Strukturformel

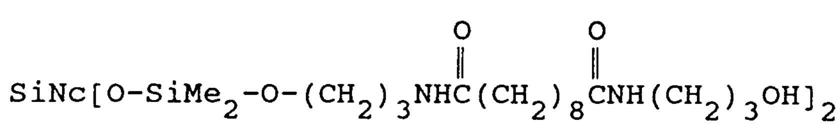 (I)

oder der Strukturformel

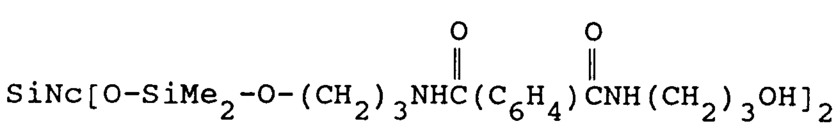 (II)

enthält.

**20.** Medium nach Anspruch 19, worin ein Substrat direkt mit der Chromophor-Zusammensetzung beschichtet wird, so daß die Informationsschicht dem Substrat unmittelbar benachbart ist.

**21.** Medium nach irgendeinem der Ansprüche 1 bis 20, worin das Silicium-naphthalocyanin die allgemeine Formel

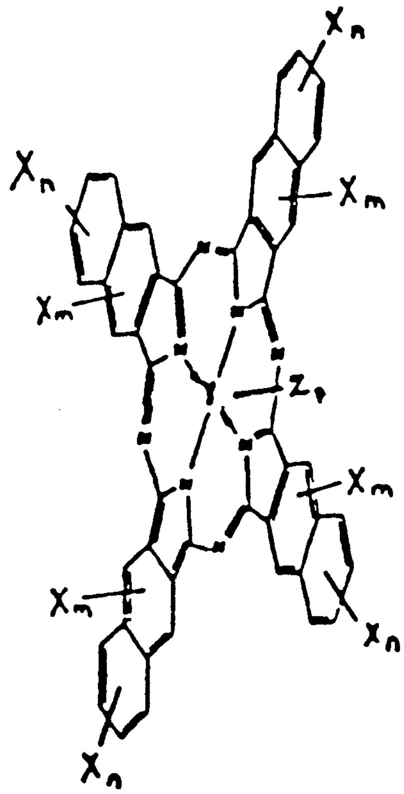

hat, in der die Substituenten

- X unabhängig voneinander aus Ether-, Säure-, Amid-, Sulfonamid-, Ester-, Acrylat-, Epoxy-, Urethan- oder Silicium-Substituenten ausgewählt sind,
- n und m die Zahl der unabhängig voneinander ausgewählten Substituenten X bezeichnen und jedes
- n unabhängig aus dem Bereich von 0 bis 4 ausgewählt ist und jedes
- m unabhängig aus dem Bereich von 0 bis 2 ausgewählt ist,
- Y das Si-Atom in der Struktureinheit "SiNc" in der Formel (I) oder (II) bezeichnet und
- $Z_p$ die Silicium enthaltenden Gruppen darstellt, die mit der Struktureinheit "SiNc" in der Formel (I) oder (II) verbunden sind.

**22.** Verfahren zum Aufzeichnen von Information in einer dünnen Folie, die auf einem relativ dicken Substrat abgeschieden worden ist, durch Bestrahlen der Folie mit einem der Information entsprechenden Laserstrahl zur Bildung von Löchern in der Folie, dadurch gekennzeichnet, daß die Folie eine organische Chromophor-Zusammensetzung umfaßt, die einen Reflexionsgrad von wenigstens 20 % zeigt und ein Silicium-naphthalocyanin der Strukturformel

$$SiNc[O\text{-}SiMe_2\text{-}O\text{-}(CH_2)_3NH\overset{\overset{O}{\|}}{C}(CH_2)_8\overset{\overset{O}{\|}}{C}NH(CH_2)_3OH]_2 \qquad (I)$$

oder der Strukturformel

$$SiNc[O\text{-}SiMe_2\text{-}O\text{-}(CH_2)_3NH\overset{\overset{O}{\|}}{C}(C_6H_4)\overset{\overset{O}{\|}}{C}NH(CH_2)_3OH]_2 \qquad (II)$$

enthält.

**23.** Verfahren zum Löschen eines Deformations-Informations-Musters eines optischen Informationsmediums, wobei das Deformations-Muster in einer auf einem Substrat abgeschiedenen Folie gebildet ist und das Löschen durch Erhitzen oder Energie-Zufuhr zu der Folie erfolgt, dadurch gekennzeichnet, daß die Folie eine organische Chromophor-Zusammensetzung umfaßt, die einen Reflexionsgrad von wenigstens 20 % zeigt und ein Silicium-naphthalocyanin der Strukturformel

$$SiNc[O\text{-}SiMe_2\text{-}O\text{-}(CH_2)_3NH\overset{\overset{O}{\|}}{C}(CH_2)_8\overset{\overset{O}{\|}}{C}NH(CH_2)_3OH]_2 \qquad (I)$$

oder der Strukturformel

$$SiNc[O\text{-}SiMe_2\text{-}O\text{-}(CH_2)_3NH\overset{\overset{O}{\|}}{C}(C_6H_4)\overset{\overset{O}{\|}}{C}NH(CH_2)_3OH]_2 \qquad (II)$$

enthält.